# EUROPEAN PATENT APPLICATION

(11) **EP 3 660 501 A1**
(43) Date of publication of application: **03.06.2020**
(21) Application number: 18208593.6
(22) Date of filing: 27.11.2018
(51) Int. Cl.: G01N 29/32, G01M 7/00, G01N 3/38

(54) **APPARATUS AND METHOD OF LAMINAR LIQUID COOLING FOR ULTRASONIC FATIGUE TESTING OF MATERIAL**

(71) Applicant: Zilinská Univerzita V Ziline, 010 26 Zilina (SK)
(72) Inventor: JAMBOR, Michal, 03601 Martin (SK); PASTOREK, Filip, 01356 Hvozdnica (SK); NOVY, Frantisek, 01014 Zilina (SK); HADZIMA, Branislav, 01008 Zilina (SK)
(74) Representative: Herrmann, Jochen

(57) **Abstract**

The invention refers to an apparatus for laminar liquid cooling for ultrasonic fatigue testing of material contains: an ultrasonic transducer (1), on which the test sample (2) is mounted, to which a cooling fluid (4) is fed through a nozzle (3) of a defined shape, thus forming a continuous liquid film (5) on the surface of the test sample (2).

The invention also refers to a method for laminar liquid cooling for ultrasonic fatigue testing of material, the method is based on that the cooling liquid (4), flowing through the nozzle (3), flows over the surface of a measuring portion (7) of a test sample (2) by a laminar flow in the direction of the gravitational force (6) and removes the heat generated by mechanical deformation of the test sample (2). Preferably, an implosion occurs outside the critical location for initiation of the fatigue crack.

## Description

### Field of the invention

The technical solution refers to an apparatus and a method of laminar liquid cooling for ultrasonic fatigue tests of material, which are used in the field of testing the resistance of construction materials to fatigue (cyclic) loading under the high frequency stress.

### Description of the related art

At present, for cooling the test bars at high frequency fatigue tests, a stream of air is used, which is directed towards the central part of the test specimen. Such cooling is sufficient for materials, which do not produce a large amount of heat when subjected to mechanical stress, for example aluminium and magnesium alloys.

For materials, which during the mechanical deformation develop the large amount of heat, like for instance steel, nickel and titanium alloys and alike, such cooling by the air stream is not sufficient to prevent structural changes of the experimental materials, caused by the heat. At present, in such cases the dipping of samples into the liquid is used, which removes the heat. During the dipping of the test sample into the liquid, during the test, intensive damaging of the sample's surface occurs, what very often leads to invalidity of the test results. Such a cooling method limits the number of the load cycles to approximately 10⁹, what is insufficient for many applications.

At the same time, this test method is inconsistent with the nature of ultrasonic fatigue tests that have been developed to achieve a huge number of load cycles in a relatively short time.

Ultrasonic fatigue testing of materials represents a special method of testing the resistance of the construction materials to the repeated cyclic stress, at frequencies close to f = 20 kHz, and it is used in cases when it is necessary to verify the fatigue life in the range 10⁶ to 5×10¹⁰ cycles.

The reduction in the number of cycles results from cavitation damage to the surface, when the tearing occurs, since the momentum of the sample, resulting from the mechanical deformation, is transferred to the liquid and so-called vacuum bubbles are formed, which subsequently implode, during the opposite cycle, tearing very small particles from the material's surface.

Since this process is repeated very quickly, the surface of the material is significantly damaged after a relatively short time. As the material fatigue process is extremely sensitive to surface defects of the material, the resulting cavities accelerate the initiation of the fatigue crack, thereby artificially distorting the test results, causing the invalidity of the fatigue test.

It is an object of the present invention to provide for efficient, reliable and precise fatigue testing of materials even with a large number of load cycles per time unit.

### Summary of the invention

The object is solved by an apparatus comprising the features of claim 1. In particular, the apparatus for laminar liquid cooling for ultrasonic fatigue testing of material comprises an ultrasonic transducer, on which the test sample is mounted, to which a cooling fluid is fed through a nozzle of a defined shape, so on the surface of the sample a continuous liquid film is created, which flows by a laminar flow in the direction of the gravitational force and removes the heat generated by the mechanical deformation of the test sample.

The object is further solved by a method comprising the features of claim 2. In particular, the method for laminar liquid cooling for ultrasonic fatigue testing of a material is based on the fact that the cooling liquid is fed to the test sample surface through a nozzle of a defined shape. Over the whole circumference on the test sample's surface a liquid film is formed, with a momentum coinciding with the gravitational force, which flows laminarly over a test portion of the sample's surface and removes the heat generated by the mechanical deformation.

When the mechanical deformation of a test sample results in a tearing of a liquid film, at the centre of its test part, the actual momentum of the fluid transfers this volume out of the central portion in the direction of gravity and implosion occurs outside of the critical site for the fatigue crack initiation. When applying the laminar fluid cooling for ultrasonic fatigue tests, no artificial acceleration of the fatigue crack initiation would occur, so the distortion of the test results is avoided and there is no limiting of the number of load cycles that can be applied during the test.

The shape of the nozzle depends on the specific features and characteristics of the test specimen (or test sample). In particular, the shape of the nozzle depends on:
- the shape of the specimen,
- the material of the specimen, and
- the type of ultrasonic fatigue test which will be carried out in respect to the specimen.

The basic dependency of the shape of the nozzle from the specimen is defined as follows: The form of the nozzle hole corresponds to the form of the external surface of a transverse section of the specimen, only that the inside width of the nozzle hole is slightly larger than the width of the transverse section of the specimen, in order to allow forming of a continuous liquid film on the surface of a test portion of the specimen. If the transverse section of the specimen is circular, the hole preferably also has a circular cross section. In particular, it is advantageous if the diameter of the nozzle hole is at least twice the specimen gauge diameter.

### Brief description of the drawings

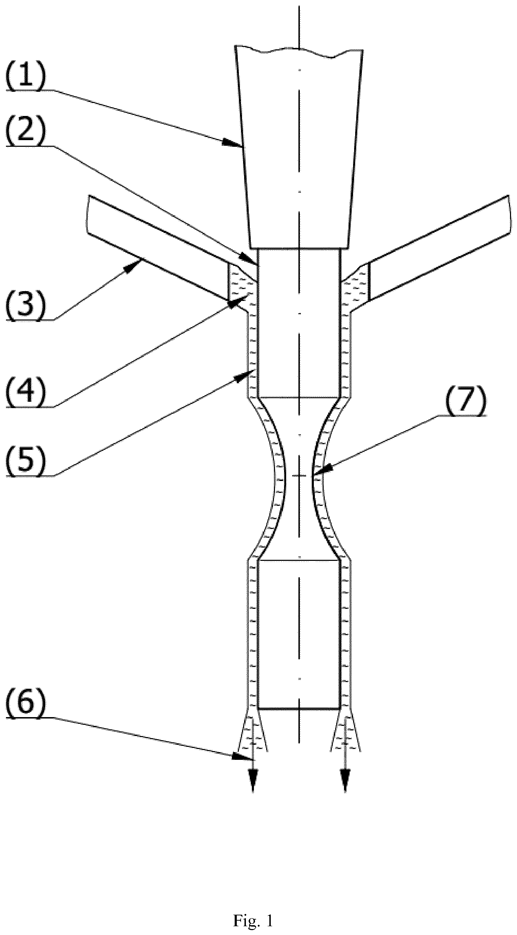

An apparatus for laminar liquid cooling for ultrasonic fatigue testing of material is shown in Figure 1.

### Detailed description of the invention

A functional apparatus for laminar liquid cooling for ultrasonic fatigue testing of material, shown in Figure 1, comprises an ultrasonic transducer 1, on which the test sample 2 (or test specimen) is mounted, to which a cooling fluid 4 is fed through a nozzle 3 of a defined shape, so that a continuous liquid film 5 is formed on the surface of the test portion of the sample 2 and removes the heat generated due the mechanical deformation.

The principle of the laminar cooling during the ultrasonic fatigue test of material lies in the fact that on the surface of the test specimen 2 over the whole circumference, a liquid film 5 is created, which has the momentum coinciding with the gravitational force 6, and which laminarly flows over the test portion of the specimen 2 and removes the heat generated during the mechanical deformation. When, due to the mechanical deformation of the test sample 2 a tearing of the liquid film 5 occurs in the central test portion 7 of the sample 2, the momentum of the cooling fluid 4 transfers that volume away from the central portion 7 in the direction of the gravitational force action 6, so the implosion occurs outside the location that is critical for initiation of the fatigue crack. When the laminar liquid cooling during the ultrasonic fatigue test is applied, no artificial acceleration of the fatigue crack initiation occurs, thus no distortion of the experimental results occurs either, as well as no reducing of the number of the loading cycles, which can be applied during the test.

### Example 1:

The apparatus for laminar liquid cooling for ultrasonic fatigue testing of material, according to Figure 1, was used for cooling of the test bars made of duplex stainless steel, which generates a large quantity of heat during the mechanical deformation. Test were executed with up to 2 × 10¹⁰ loading cycles, when during that number of loading cycles, no initiation of the fatigue crack, accelerated by the surface cavitations, was observed.

### Industrial applicability

The apparatus for laminar liquid cooling for ultrasonic fatigue testing of material provides the possibility for verification of the fatigue life of materials used in industry for manufacturing of components, which are intensively cyclically loaded at high frequencies, like, for example, blades of the car's turbo-coolers, blades of airplane engines and the like, without reducing the target number of loading cycles. Besides the application in transportation, the increase of the fatigue life of components is also necessary in many other branches of industry, for example in manufacturing in manipulation technics, manufacturing machines and various constructions, and in the development of new materials with targeted application for cyclically stressed components.

## Claims

1. Apparatus for laminar liquid cooling for ultrasonic fatigue tests of a sample material, **characterized by** the fact that it comprises an ultrasonic transducer (1) on which a test sample (2) made of the sample material is mounted and in that a cooling fluid (4) is supplied to the test sample (2) through a nozzle (3) of a defined shape in order to form a continuous liquid film (5) on the surface of at least part of the test sample (2).

2. Apparatus according to claim 1, wherein the nozzle (3) is formed and located in respect to the test sample (2) such that the continuous liquid film (5) on the surface of at least part of the test sample (2) is formed due to the gravitational force (6) acting on the cooling fluid (4) supplied to the test sample (2).

3. Apparatus according to claim 1 or 2, wherein the test sample (2) has a longitudinal extension and that the test sample (2) is located in the apparatus with the longitudinal extension running essentially in a vertical direction.

4. Apparatus according to claim 3, wherein the nozzle (3) is located at the top of a test portion (7) of the test sample (2), the test portion (7) comprising a central portion, where during a fatigue test a mechanical deformation may occur.

5. Apparatus according to claim 3 or 4, wherein a shape of a nozzle hole of the nozzle (3) corresponds to the form of an external surface of a transverse section transverse to the longitudinal extension of the test sample (2), wherein an inside width of the nozzle hole is larger than the width of the transverse section of the test sample (2).

6. Apparatus according to any of the claims 3 to 5, wherein with the transverse section of the test sample (2) being circular, the nozzle hole has a circular cross section.

7. Apparatus according to any of the claims 3 to 6, wherein a diameter of the nozzle hole is at least twice a gauge diameter of the test sample (2).

8. Method for laminar liquid cooling for ultrasonic fatigue testing of a sample material by an apparatus according to one of the preceding claims, **characterized by** the fact that the cooling liquid (4) flowing through the nozzle (3) flows over the external surface of a test portion (7) of the test sample (2) by means of a laminar flow in a direction of a gravitational force (6) and removes heat generated by mechanical deformation of the test sample (2) in a central portion of the test portion (7) due to the ultrasonic fatigue testing.

9. The method for laminar liquid cooling for ultrasonic fatigue testing of a material according to claim 8, wherein if due to the mechanical deformation of the test sample (2) in the central portion of the test portion (7), the liquid film (5) is torn in the middle of the test portion (7) of the test sample (2), the cooling liquid's (4) own momentum transfers a volume of the remaining cooling liquid (4) out of the central portion of the test sample (2) in the direction of the gravitational force (6), and an implosion of the liquid film (5) occurs outside of a critical location for initiation of a fatigue crack.
